# FASCICULE DE BREVET EUROPEEN

(11) **EP 3 840 000 B1**
(45) Date de publication et mention de la délivrance du brevet: **26.07.2023**
(21) Numéro de dépôt: 20211694.3
(22) Date de dépôt: 03.12.2020
(51) Int. Cl.: H01H 13/86, H02G 3/08, H02G 3/10, H02G 3/14

(54) **COMMUTATEUR ÉLECTRIQUE ÉTANCHE**
WASSERDICHTER ELEKTRISCHER SCHALTER
WATERPROOF ELECTRICAL SWITCH

(30) Priorité: 20.12.2019 FR 1915124
(43) Date de publication de la demande: 23.06.2021
(73) Titulaire: Legrand France, 87000 Limoges (FR); Legrand SNC, 87000 Limoges (FR)
(72) Inventeur: DUMAS, Eric, 87340 La Jonchère Saint Maurice (FR); GOURINCHAS, Laurent, 87700 Aixe-sur-Vienne (FR)
(74) Mandataire: Jacobacci Coralis Harle

(56) Documents cités:
- EP-A1- 0 600 634
- EP-A1- 1 860 748
- DE-B3-102011 118 178

## Description

La présente invention concerne le domaine des commutateurs électriques, notamment des commutateurs électriques étanches.

Elle concerne plus particulièrement un commutateur électrique étanche comprenant un mécanisme de commutation pourvu d'un socle renfermant des éléments électriques et/ou électroniques et d'au moins un entraîneur placé à l'avant du socle, une membrane souple d'étanchéité placée à l'avant du mécanisme de commutation, par-dessus ledit au moins un entraîneur, de manière à isoler de l'extérieur les éléments électriques et/ou électroniques du mécanisme de commutation, et un enjoliveur pourvu d'un cadre enjoliveur. La présente invention concerne notamment un commutateur électrique étanche tel que précédemment décrit, dans lequel ledit au moins entraîneur est actionnable par une touche de commande basculante.

Classiquement, comme le décrit le document EP1860748, un commutateur électrique étanche comporte un boîtier dans lequel est logé un mécanisme de commutation, et un enjoliveur qui ferme ce boîtier à la manière d'un couvercle. Afin de garantir l'étanchéité du commutateur électrique, l'enjoliveur est muni d'une membrane d'étanchéité et est rapporté par-dessus le mécanisme de commutation, à l'avant du boîtier, de manière que ladite membrane d'étanchéité recouvre le mécanisme de commutation et l'enferme dans le boîtier. Le commutateur électrique comprend, en outre, des moyens de commande du mécanisme de commutation, positionnés à l'extérieur du volume interne étanche délimité par le boîtier et la membrane d'étanchéité. Ces moyens de commande agissent au travers de la membrane d'étanchéité pour actionner le mécanisme de commutation.

De tels commutateurs électriques étanches classiques sont particulièrement volumineux et encombrants.

Le but de la présente invention est donc de proposer un commutateur électrique qui présente une étanchéité pérenne tout en étant compact.

Plus particulièrement, l'invention propose un commutateur électrique étanche selon la revendication 1.

Le montage par l'avant du socle du mécanisme de commutation sur le cadre enjoliveur participe à la diminution de la hauteur totale du commutateur électrique, et réduit donc l'encombrement global du commutateur électrique.

Dans le commutateur électrique selon l'invention, la membrane souple d'étanchéité est tendue sur un cadre rigide, lequel est lui-même rapporté, par l'avant, sur le cadre enjoliveur.

L'enjoliveur du commutateur électrique selon l'invention est ainsi prévu pour assurer deux fonctions de manière dissociée : d'une part, supporter le mécanisme d'appareillage, et, d'autre part, assurer l'étanchéité du commutateur électrique par l'avant, via le cadre rigide sur lequel est tendue la membrane d'étanchéité.

D'autres caractéristiques non limitatives et avantageuses du commutateur électrique conforme à l'invention, prises individuellement ou selon toutes les combinaisons techniquement possibles, sont données dans les sous-revendications 3 à 14.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

La description qui va suivre en regard des dessins annexés, donnés à titre d'exemples non limitatifs, fera bien comprendre en quoi consiste l'invention et comment elle peut être réalisée. Sur les dessins annexés :
- la figure 1 est une vue schématique en perspective avant d'un premier mode de réalisation du commutateur électrique selon l'invention, dont l'enjoliveur est rapporté sur une boîte électrique,
- la figure 2 est une vue schématique en coupe du commutateur électrique de la figure 1 rapporté dans la boîte électrique, selon un plan médian qui coupe le commutateur électrique verticalement et perpendiculairement à sa face avant,
- la figure 3 est une vue schématique avant, en perspective éclatée, du commutateur électrique de la figure 1 rapporté dans la boîte électrique,
- la figure 4 est une vue schématique arrière, en perspective éclatée, du commutateur électrique de la figure 1 rapporté dans la boîte électrique,
- la figure 5 est une vue schématique en perspective avant d'un deuxième mode de réalisation du commutateur électrique selon l'invention, dont l'enjoliveur est rapporté sur une boîte électrique,
- la figure 6 est une vue schématique en coupe du commutateur électrique de la figure 5 rapporté dans la boîte électrique, selon un plan médian qui coupe le commutateur électrique verticalement et perpendiculairement à sa face avant,
- la figure 7 est une vue schématique avant, en perspective éclatée, du commutateur électrique de la figure 5 rapporté dans la boîte électrique,
- la figure 8 est une vue schématique arrière, en perspective éclatée, du commutateur électrique de la figure 5 rapporté dans la boîte électrique,
- la figure 9 est une vue schématique avant des premier et deuxième modes de réalisation du commutateur électrique selon l'invention, dont les enjoliveurs respectifs sont rapportés sur un cadre d'encastrement double poste horizontal,
- la figure 10 est une vue schématique avant, en perspective éclatée, des commutateurs électriques de la figure 9 rapportés dans le cadre d'encastrement, et,
- la figure 11 est une vue schématique arrière, en perspective éclatée, des commutateurs électriques de la figure 9 rapportés dans le cadre d'encastrement.

En préliminaire, on notera que d'une figure à l'autre, les éléments identiques des différents modes de réalisation du commutateur électrique selon l'invention seront, dans la mesure du possible, référencés par les mêmes signes de référence et ne seront pas décrits à chaque fois.

Par convention, dans la suite de la description, les termes « avant » et « arrière » seront utilisés par rapport à la direction du regard de l'utilisateur sur le commutateur électrique rapporté dans les aménagements prévus à cet effet sur une paroi quelconque. Ainsi, « l'avant » d'un élément désigne le côté de cet élément qui est tourné vers l'utilisateur, tandis que « l'arrière » désigne le côté opposé. Autrement dit, lorsque le commutateur électrique est en place sur la paroi murale d'une pièce, « l'avant » d'un élément désigne le côté de cet élément tourné vers l'intérieur de la pièce et « l'arrière » désigne le côté de cet élément tourné vers la paroi murale. Les termes « intérieur » (ou « interne ») et « extérieur » (ou « externe ») sont quant à eux utilisés par rapport au commutateur électrique lui-même, pour désigner respectivement le côté d'un élément tourné vers le centre du commutateur électrique et le côté d'un élément tourné vers l'extérieur de ce commutateur électrique.

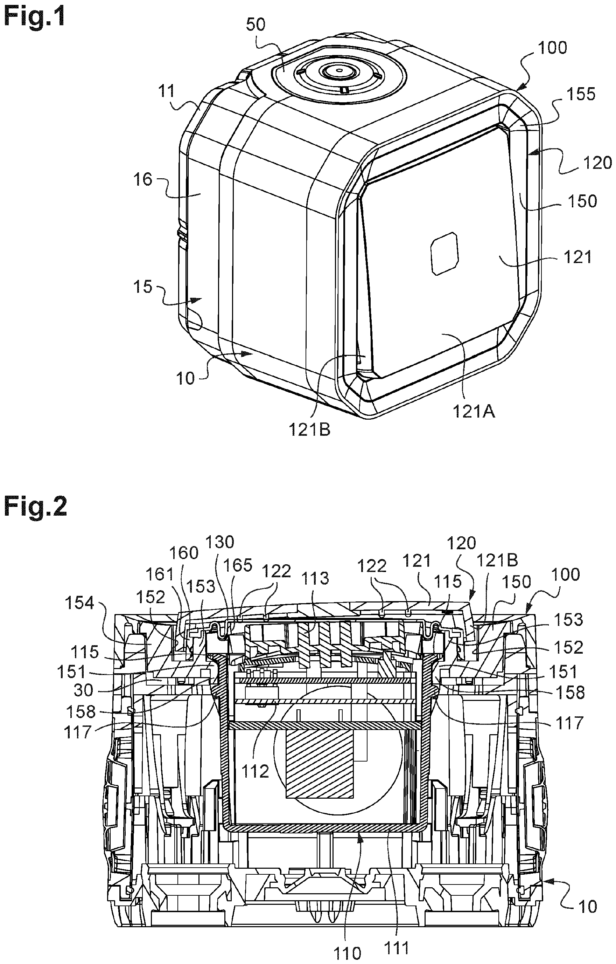

Sur les figures 1 à 11, on a représenté deux modes de réalisation particuliers d'un commutateur électrique 100; 200 étanche conforme à l'invention, présentant au moins une touche de commande basculante, mais l'invention concerne plus généralement tout type de commutateur électrique étanche.

Comme le montrent les figures 2 à 4 et 6 à 8, le commutateur électrique 100 ; 200 selon l'invention comprend, d'une part, un mécanisme de commutation 110; 210 pourvu d'un socle 111 ; 211 renfermant des éléments électriques et/ou électroniques 112 (voir figure 2) et d'au moins un entraîneur 113 ; 213A, 213B placé à l'avant dudit socle 111 ; 211, et, d'autre part, un enjoliveur 120 ; 220 qui donne sa fonction au commutateur électrique 100 ; 200 et apporte la finition extérieure à ce commutateur électrique 100 ; 200. Dans un but de simplification, le mécanisme de commutation sera appelé dans la suite de la description « moteur ».

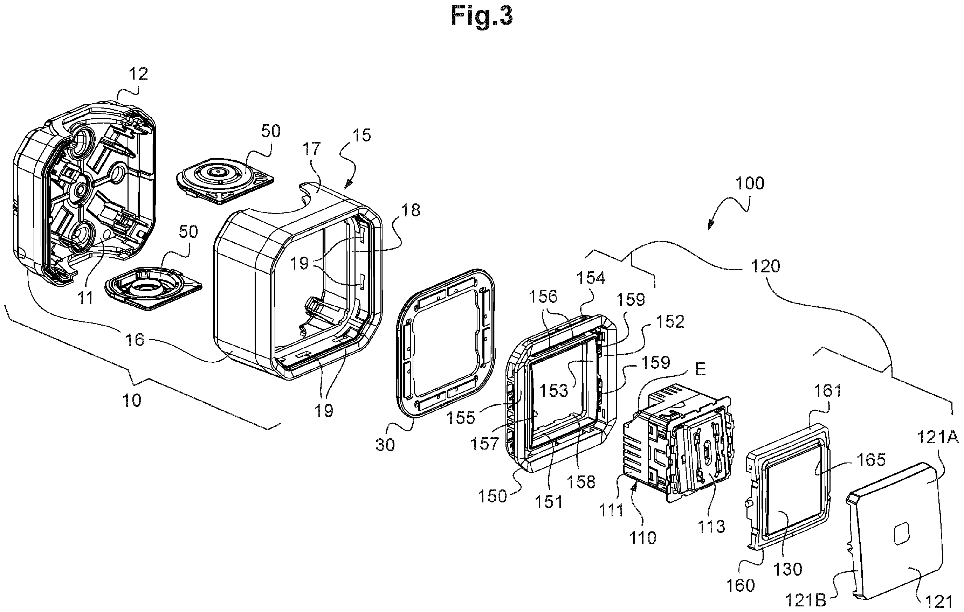

Le premier mode de réalisation du commutateur électrique selon l'invention représenté sur les figures 1 à 4 est un interrupteur simple 100 étanche. L'enjoliveur 120 d'un tel interrupteur simple 100 comporte une simple touche de commande 121 basculante (voir figure 1), cette seule touche de commande permettant d'actionner un entraîneur 113, placé derrière ladite touche de commande 121 basculante, pour ouvrir ou fermer un seul circuit électrique du moteur 110 (voir figures 2 et 3).

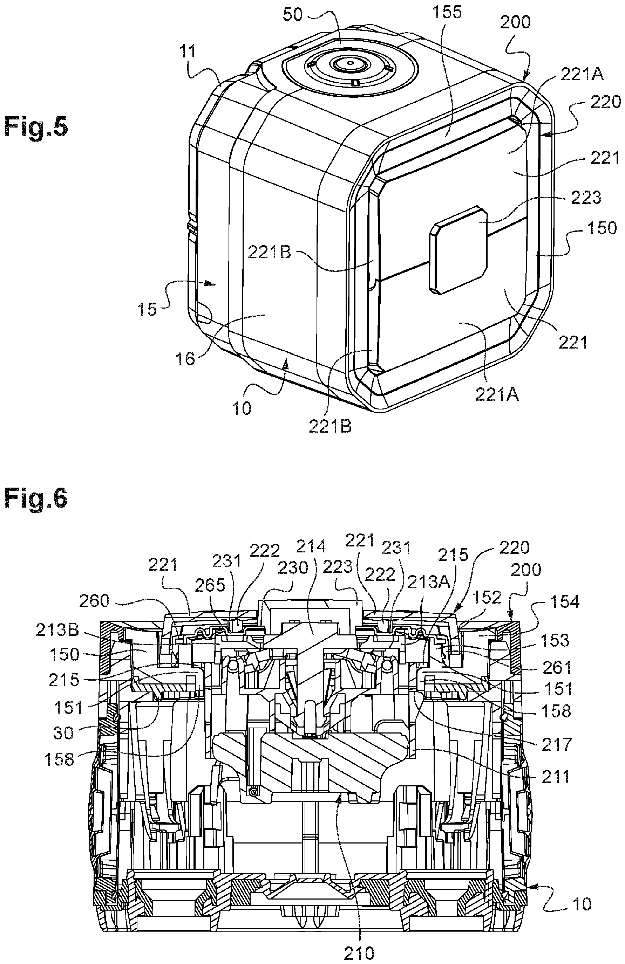

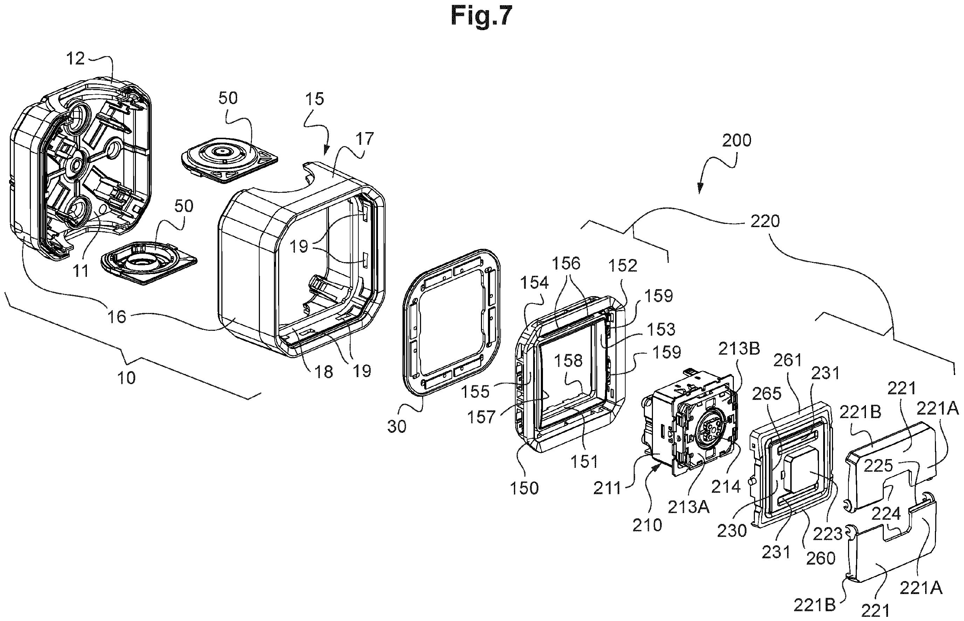

Le deuxième mode de réalisation du commutateur électrique selon l'invention représenté sur les figures 5 à 8 est un interrupteur poussoir 200 étanche. L'enjoliveur 220 d'un tel interrupteur poussoir 200 comporte, d'une part, un bouton poussoir 223 central (voir figure 5) permettant d'actionner un entraîneur 214 central placé derrière ledit bouton poussoir 223, pour ouvrir un circuit électrique du moteur 210 (voir figures 6 et 7), et, d'autre part, deux demi-touches de commande 221 basculantes indépendantes (voir figure 5) permettant chacune d'actionner un entraîneur 213A, 213B latéral placé derrière la demi-touche de commande 221 basculante correspondante, lesquels entraîneurs 213A, 213B latéraux agissent sur le circuit électrique pour le fermer et commander la montée ou la descente d'un volet roulant (voir figures 6 et 7). La commande du bouton poussoir 223 est indépendante de la commande des deux demi-touches de commande 221 basculantes. En revanche, chaque entraîneur 213A, 213B latéral est interdépendant de l'autre entraîneur 213A, 213B latéral, de sorte que lorsque l'un des entraîneurs 213A, 213B latéraux est poussé vers l'arrière, l'autre est entraîné vers l'avant, et inversement. En variante, un tel interrupteur poussoir pourrait comprendre un bouton poussoir central entouré d'une simple touche basculante, dont une position actionnerait la montée et l'autre la descente du volet.

Quel que soit le commutateur électrique 100; 200, le socle 111; 211 du moteur 110; 210 se présente sous la forme d'une enveloppe isolante dans laquelle sont logés les éléments électriques et/ou électroniques 112, notamment le circuit électrique ainsi que des bornes de connexion à raccorder au réseau électrique via des entrées de bornes E (voir figures 3, 4 et 8) selon le mode de fonctionnement du commutateur électrique 100; 200. L'enveloppe isolante est par exemple réalisée en matière plastique moulée. Le socle 111 ; 211 présente ici une forme de boîtier globalement parallélépipédique (voir figures 3, 4, 7 et 8). Les entraîneurs 113 ; 213A, 213B, 214 du moteur 110 ; 210 sont placés à l'avant du socle 111 ; 211.

Comme le montrent les figures 2 à 4 et 6 à 8, quel que soit le commutateur électrique 100 ; 200 l'enjoliveur 120; 220 comporte une membrane souple 130; 230 d'étanchéité qui isole de l'extérieur les éléments électriques et/ou électroniques 112 contenus dans le socle 111 ; 211. Cette membrane souple 130 ; 230 est placée à l'avant du moteur 110; 210, par-dessus les entraîneurs 113 ; 213A, 213B des touches de commande 121 ; 221 basculantes (voir figures 2 et 6) et rend étanche, par l'avant, le commutateur électrique 100 ; 200. La membrane souple 130 ; 230 d'étanchéité recouvre entièrement les entraîneurs 113 ; 213A, 213B. Les touches de commande 121 ; 221 basculantes n'entrent donc jamais en contact direct avec l'entraîneur 113 ; 213A, 213B qu'elles sont susceptibles d'actionner, la membrane souple 130 ; 230 d'étanchéité s'interposant entre lesdits entraîneurs 113 ; 213A, 213B et lesdites touches de commandes 212 ; 221 basculantes. Ainsi, la membrane d'étanchéité 130 ; 230, qui est placée entre le moteur 110 ; 210 et les touches de commande 121 ; 221 basculantes de l'enjoliveur 120 ; 220, empêche l'humidité extérieure d'atteindre les éléments électriques et/ou électroniques 112 du commutateur électrique 100 ; 200 depuis la face avant du commutateur électrique 100 ; 200.

Comme le montrent les figures 2 à 4 et 6 à 8, l'enjoliveur 120 ; 220 du commutateur électrique 100 ; 200 est ici pourvu d'un cadre enjoliveur 150 sur lequel est monté le socle 111 ; 211 du moteur 110 ; 210. Ce cadre enjoliveur 150 est identique dans les deux modes de réalisation du commutateur électrique 100 ; 200. Il est formé par une pièce monobloc en matière thermoplastique rigide, par exemple en polypropylène. Il peut être obtenu par moulage.

De manière remarquable, il est prévu que le socle 111 ; 211 du moteur 110 ; 210 du commutateur électrique 100 ; 200 soit monté par l'avant sur ce cadre enjoliveur 150.

Cette configuration est particulièrement avantageuse dans la mesure où elle participe à la diminution de la hauteur totale du commutateur électrique 100 ; 200, et réduit ainsi l'encombrement global du commutateur électrique 100 ; 200.

Plus précisément, comme le montrent les figures 3, 4, 7 et 8, le cadre enjoliveur 150 présente une forme globalement parallélépipédique, aux angles coupés.

Comme le montrent les figures 3, 4, 7 et 8, le cadre enjoliveur 150 comporte une paroi latérale périphérique externe 154 et une paroi latérale périphérique interne 153 parallèles, reliées par un trottoir périphérique de sorte que leurs faces internes en regard délimitent une gorge ou rainure périphérique 152 qui s'ouvre vers l'avant (voir figures 3 et 7). La paroi latérale périphérique interne 153 longe l'ouverture centrale 157 du cadre enjoliveur 150. L'ouverture centrale 157 présente ici un contour carré mais elle pourrait présenter une toute autre forme adaptée à la forme extérieure du socle 111 ; 211 du moteur 110 ; 210. En effet, le socle 111 ; 211 du moteur 110 ; 210 est monté sur le cadre enjoliveur 150 au travers de ladite ouverture centrale 157.

Le cadre enjoliveur 150 présente en outre une collerette de façade 155 esthétique portée par sa paroi latérale périphérique externe 154, qui s'étend à partir de la gorge périphérique 152, vers l'extérieur du cadre enjoliveur 150 (voir figures 3 et 7). Cette collerette de façade 155 est visible en face avant du commutateur électrique 100 ; 200 et borde sur quatre côté la touche de commande 121 ou les demi-touches de commande 221 assemblées du commutateur électrique 100 ; 200 de manière à parfaire la finition extérieure du commutateur électrique 100 ; 200 (voir figures 1, 5 et 9).

Aux fins du montage du socle 111 ; 211, le cadre enjoliveur 150 comporte un trottoir 151 qui court le long du contour de l'ouverture centrale 157 (voir figures 2, 3, 6 et 7). Ce trottoir 151 comporte le long de deux côtés opposés parallèles, deux bords tombants 158. La tranche libre de chaque bord tombant 158 présente une forme en créneau (figures 2, 4, 6 et 8).

Le trottoir 151 et les bords tombants 158 du cadre enjoliveur 150 sont destinés à être pris en sandwich par des moyens d'accroche 115, 117 ; 215, 217 du socle 111 ; 211 du moteur 110 ; 210 (figures 2 et 6).

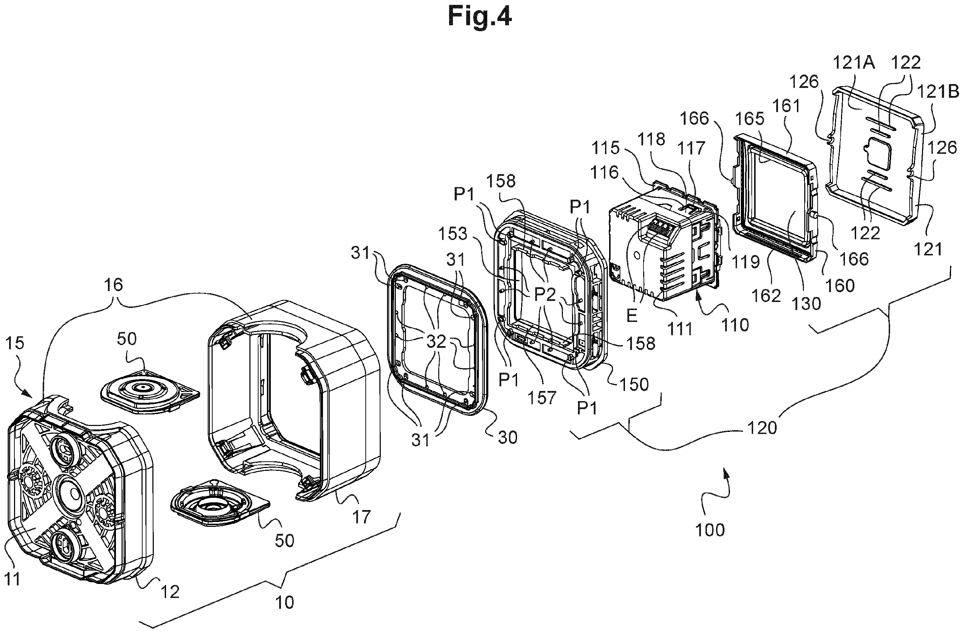

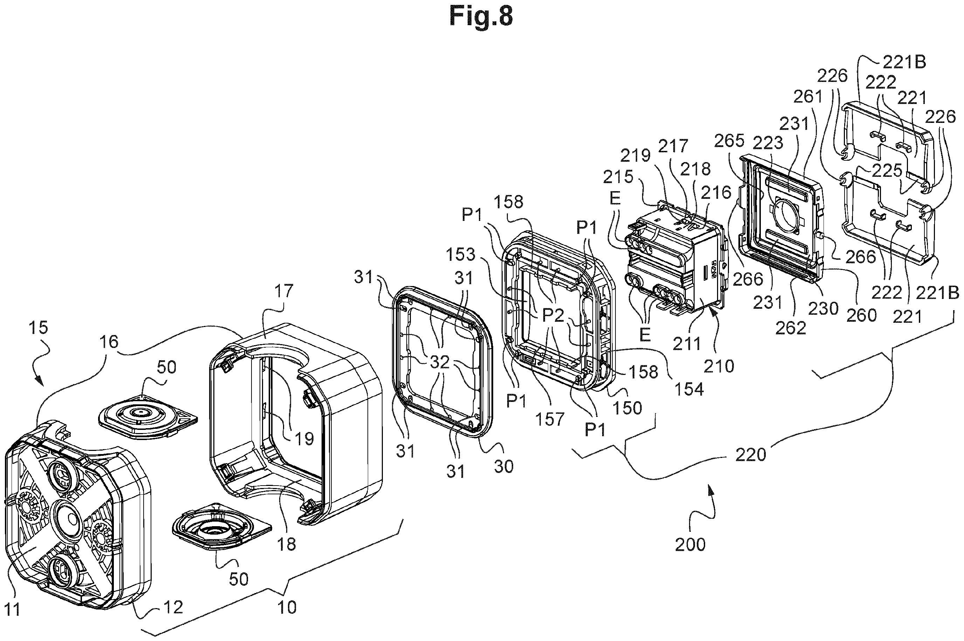

Comme le montrent les figures 4 et 8, le socle 111 ; 211 du moteur 110; 210 comporte plus précisément, d'une part, une collerette 115 ; 215 avant, dont la face arrière est destinée à prendre appui contre la face avant du trottoir 151 du cadre enjoliveur 150 (voir figures 2 et 6), et, d'autre part, deux pattes 116 ; 216 flexibles, attachées à deux parois latérales opposées du socle 111 ; 211, et terminées à l'avant par des dents 117 ; 217 destinées à s'accrocher sur la tranche libre des bords tombants 158 prolongeant vers l'arrière le trottoir 151 (voir figures 2 et 6).

Comme le montrent les figures 4 et 8, la racine de chaque patte 116 ; 216 est solidaire de la paroi latérale correspondante et forme ainsi une charnière 118 ; 218 de flexion. Le corps de chaque patte 116 ; 216 forme un pan incliné 119 ; 219 entre la charnière 118 ; 218 arrière et la dent 117 ; 217 avant, de sorte que lorsque le socle 111 ; 211 est inséré par l'avant dans l'ouverture centrale 157 du cadre enjoliveur 150, les pans inclinés 119 ; 219 entrent en contact avec le trottoir 151 qui force alors les pattes 116 ; 216 à fléchir élastiquement vers l'intérieur du socle 111 ; 211 jusqu'à ce que les dents 117 ; 217 passent derrière les bords tombants 158 et s'accrochent sur la tranche libre en forme de créneaux de ces bords tombants 158. Le passage des dents 117 ; 217 derrière les bords tombants 158 provoque un « clic » sonore qui indique l'accrochage du socle 111 ; 211 du moteur 110 ; 210 sur le cadre enjoliveur 150. Plus particulièrement, le « clic » sonore est provoqué par le retour élastique des pattes 116 ; 216 dans leur position initiale et l'accrochage de chaque dent 117 ; 217 derrière le bord tombant 158. Dans cette position, la collerette 115 ; 215 du socle 111 ; 211 est en appui contre le trottoir 151 (voir figures 2 et 6).

Ainsi, la collerette 115 ; 215 du socle 111 ; 211 forme une surface de retenue qui empêche que le moteur 110 ; 210 ne puisse être enfoncé vers l'arrière au-delà du trottoir 151, tandis que les dents 117 ; 217 portées par les pattes 116 ; 216 empêchent que le moteur 110 ; 210 puisse être retiré du cadre enjoliveur 150 par une simple force de traction vers l'avant. Si toutefois un installateur souhaite retirer le moteur 110 ; 210 du cadre enjoliveur 150, il peut y parvenir en enfonçant les deux pattes 116 ; 216 vers l'intérieur du socle 111 ; 211, et en tirant simultanément le socle 111 ; 211 du moteur 110 ; 210 vers l'avant.

Le cadre enjoliveur 150 reçoit ainsi, de manière autonome et par l'avant, le socle 111 ; 211 du moteur 100 ; 210. Les entraîneurs 113 ; 213A, 213B, 214 du moteur 110 ; 210 restent accessibles à travers l'ouverture centrale 157 du cadre enjoliveur 150.

Selon l'invention, comme le montrent les figures 3, 4, 7 et 8, la membrane souple 130 ; 230 d'étanchéité est tendue sur un cadre rigide 160 ; 260 lui-même rapporté par l'avant sur le cadre enjoliveur 150. Le cadre rigide 160 ; 260 est fixé sur le cadre enjoliveur 150 après que le moteur 110 ; 210 y ait été fixé, pour que la membrane souple 130 ; 230 d'étanchéité recouvre la face avant du moteur 110 ; 210. Le cadre rigide 160 ; 260 permet de fixer la membrane souple 130 ; 230 d'étanchéité sur le cadre enjoliveur 150. La membrane souple 130; 230 d'étanchéité permet quant à elle de garantir l'étanchéité du commutateur électrique 100 ; 200 en isolant de l'environnement extérieur, d'une part, les entraîneurs 113 ; 213A, 213B placés à l'avant du socle 111 ; 211 du moteur 110 ; 210 et actionnés depuis l'extérieur du commutateur électrique 100 ; 200 par les touches de commande 121 ; 221 basculantes, et, d'autre part, les éléments électriques et/ou électroniques 112 logés dans le socle 111 ; 211 du moteur 110 ; 210 commutateur électrique 100 ; 200.

Avantageusement, la membrane souple 130; 230 d'étanchéité tendue sur le cadre rigide 160; 260 forme avec ce dernier une pièce monobloc bi-matière. Dans l'interrupteur poussoir 200, le bouton poussoir 223 est partie intégrante de cette pièce monobloc bi-matière, de sorte que le bouton poussoir 223 rigide, la membrane souple 230 et le cadre rigide 260 forment ensemble la pièce monobloc bi-matière (voir figure 7).

Le cadre rigide 160 ; 260, le cas échéant le bouton poussoir 223, et la membrane souple 130 ; 230 sont par exemple obtenus par moulage bi-matière. La membrane souple 130; 230 d'étanchéité est ici réalisée en une matière élastomère thermoplastique, par exemple en SEBS (Styrene Ethylene Butylene Styrene). La matière élastomère thermoplastique est suffisamment souple pour pouvoir être déformée, comme il sera expliqué ci-après. Le cadre rigide 160 ; 260, et le cas échéant le bouton poussoir 223, sont quant à eux réalisés en une matière thermoplastique rigide, par exemple en polypropylène. Le bouton poussoir 223 et le cadre rigide 260 peuvent être réalisés en une même matière ou non.

Dans l'interrupteur simple 100 représenté sur les figures 1 à 4, le cadre rigide 160 délimite intérieurement une ouverture 165 (voir figures 3 et 4) entièrement obturée par la membrane souple 130 d'étanchéité. Ainsi, une fois le cadre rigide 160 rapporté sur le cadre enjoliveur 150 de l'interrupteur simple 100, la membrane souple 130 d'étanchéité recouvre toute la face avant du moteur 110 (voir figure 2). L'entraîneur 113 du moteur 110 est donc intégralement recouvert par la membrane souple 130, cette dernière s'interposant entre ledit entraîneur 113 et la touche de commande 121. L'entraîneur 113 du moteur 110 est actionnable par l'utilisateur, via la touche de commande 121, à travers l'ouverture 165, par l'intermédiaire de la membrane souple 130 d'étanchéité qui se déforme (voir figure 2), comme il sera détaillé ci-après.

Dans l'interrupteur poussoir 200 représenté sur les figures 5 à 8, la membrane souple 230 d'étanchéité s'étend exclusivement entre le bouton poussoir 223 rigide et le cadre rigide 260. Autrement dit, la membrane souple 230 d'étanchéité s'étend dans une ouverture 265 délimitée intérieurement par le cadre rigide 260 (voir figures 7 et 8), sans obturer complètement cette ouverture 265 puisqu'elle est interrompue par le bouton poussoir 223. La membrane souple 230 est attachée au bord du bouton poussoir 223 et ne passe pas sous ledit bouton poussoir 223 de sorte qu'elle ne risque pas d'être endommagée par son actionnement. Ainsi, la membrane souple 230 ne s'interpose pas entre le bouton poussoir 223 et l'entraîneur central 214. En revanche, les entraîneurs 213A, 213B latéraux situés de part et d'autre de l'entraîneur 214 central sont intégralement recouverts par la membrane souple 230, cette dernière s'interposant entre lesdits entraîneurs 213A, 213B latéraux et les touches de commande 221. Ainsi, une fois le cadre rigide 260 rapporté sur le cadre enjoliveur 150 de l'interrupteur poussoir 200, la membrane souple 230 d'étanchéité et le bouton poussoir 223 recouvrent, ensemble, toute la face avant du moteur 210 (voir figure 6). Comme il sera détaillé ci-après, l'entraîneur 214 central du moteur 210 est actionnable par l'utilisateur à travers l'ouverture 265, via le bouton poussoir 223 qui entraîne un débattement de la membrane souple 230, tandis que les entraîneurs 213A, 213B latéraux sont actionnables par l'utilisateur via les touches de commandes 221, à travers l'ouverture 265, par l'intermédiaire de la membrane souple 230 d'étanchéité qui se déforme (voir figure 6).

Pour la fixation du cadre rigide 160 ; 260 à l'avant du cadre enjoliveur 150, le cadre rigide 160 ; 260 et le cadre enjoliveur 150 sont pourvus de moyens de montage mécaniques réciproques.

Plus précisément, les moyens de montage mécaniques réciproques du cadre rigide 160 ; 260 sur le cadre enjoliveur 150 sont des moyens d'emboîtement 152, 161 ; 261 et/ou des moyens d'encliquetage 156, 162 ; 262.

Plus particulièrement, la gorge ou rainure périphérique 152 du cadre enjoliveur 150 est destinée à recevoir par emboîtement un rebord externe périphérique 161 ; 261 du cadre rigide 160 ; 260 (voir figures 2, 3, 6 et 7).

En outre, le cadre enjoliveur 150 comporte des dents de retenue 156 en saillie à l'intérieur de la gorge périphérique 152 (voir figures 3 et 7), destinées à venir en prise avec des creux 162 ; 262 correspondants prévus sur le cadre rigide 160 ; 260 (voir figures 4 et 8). Ici les dents de retenue 156 sont portées par la paroi latérale périphérique interne 153 et font saillie dans la gorge périphérique 152 en direction de la paroi latérale périphérique externe 154 du cadre enjoliveur 150, sur deux côtés opposés dudit cadre enjoliveur 150, tandis que les creux 162 ; 262 correspondants du cadre rigide 160 ; 260 sont prévus sur la face interne du rebord externe périphérique 161 ; 261 de deux côtés opposés dudit cadre rigide 160 ; 260.

Les moyens de montage mécaniques réciproques autorisent une désolidarisation des deux cadres rigide 160 ; 260 et enjoliveur 150, de sorte que la membrane souple 130 ; 230 d'étanchéité peut être retirée pour accéder au moteur 110 ; 210 si besoin. Il est aussi envisageable de pouvoir remplacer le cadre rigide 160 ; 260 et la membrane souple 130 ; 230 d'étanchéité, par exemple suite à une usure de la membrane souple 130 ; 230, le reste des éléments pouvant être conservés à l'identique.

Selon une variante non représentée, il est envisageable que le cadre rigide soit soudé sur le cadre enjoliveur, par exemple au moyen d'une soudure ultrason. Ces deux pièces sont alors solidarisées de manière indissociable l'une de l'autre, de sorte que le moteur ne peut plus être démonté du cadre enjoliveur, ni la membrane souple d'étanchéité remplacée.

Avantageusement, quel que soit le mode de réalisation envisagé, le cadre rigide 160 ; 260 porte en outre, sur la face externe de deux côtés opposés de son rebord externe périphérique 161 ; 261, deux tourillons 166 ; 266 en saillie (figures 4 et 8) sur lesquels est montée à pivotement chaque touche de commande 121 ; 221 basculante du moteur 110; 210. Ces tourillons 166 ; 266 sont destinés à être engagés dans des paliers 126 ; 226 correspondants prévus sur chaque touche de commande 121 ; 221 (figures 4 et 8).

Plus précisément, dans l'interrupteur simple 100, la touche de commande 121 est formée par une paroi de façade 121A globalement plane, prolongée vers l'arrière par une paroi latérale 121B (voir figures 3 et 4). Ici, la paroi de façade 121A de la touche de commande 121 présente une forme globalement carrée aux angles coupés, mais elle pourrait présenter une autre forme. Il est prévu, sur deux côtés opposés de cette touche de commande 121, deux paires de pattes d'accroche en forme d'arc de cercle qui délimitent deux paliers 126 semi-circulaires (voir figure 4). Chaque palier 126 s'engage élastiquement sur le tourillon 166 correspondant du cadre rigide 160. Une fois montée sur le cadre rigide 160, la touche de commande 151 le recouvre entièrement. Les pattes d'accroche sont plates, de sorte qu'une fois la touche de commande 121 montée sur le cadre rigide 160 lui-même monté sur le cadre enjoliveur 150, les pattes d'accroche et la paroi latérale 121B de la touche de commande 121 sont contenues dans la gorge périphérique 152 du cadre enjoliveur 150 (voir figure 2). La paroi latérale 121B de la touche de commande 121 parfait la finition de l'interrupteur simple 100 et empêche à l'utilisateur d'accéder sous la touche de commande 121, quelle que soit la position de cette touche de commande 121 (voir figure 1).

Dans l'interrupteur poussoir 200, les deux demi-touches de commande 221 basculantes sont identiques. En outre, les deux demi-touches de commande 221 basculantes sont indépendantes l'une de l'autre de sorte que l'actionnement d'une des demi-touches 221 basculantes n'entraîne pas l'actionnement opposé de l'autre demi-touche 221 basculante. Chaque demi-touche de commande 221 est formée par une paroi de façade 221A globalement plane et rectangulaire, de sorte que les deux demi-touches de commande 221 accolées forment un carré (voir figures 5 et 7). Il est prévu sur le côté du rectangle destiné à s'accoler à l'autre demi-touche, une découpe 224 complémentaire de la forme du bouton poussoir 223 (voir figure 7). Ainsi, lorsque les deux demi-touches de commande 221 sont accolées l'une avec l'autre, elles bordent de manière esthétique le bouton poussoir 223 (voir figure 5). Sur les trois côtés droits de chaque demi-touche de commande 221, une paroi latérale 221B prolonge vers l'arrière la paroi de façade 221A, tandis que sur le quatrième côté découpé, il est prévu une languette 225 destinée à se glisser sous la paroi de façade 221A de l'autre demi-touche de commande 221 lorsqu'elles sont accolées (voir figures 7 et 8). La languette 225 de chaque demi-touche de commande 221 permet d'éviter qu'un jour soit visible entre les deux demi-touches de commande 221. Les languettes 225 renforcent l'esthétique de l'interrupteur poussoir 200, tout en empêchant l'utilisateur de pouvoir accéder sous les demi-touches de commande 221, quelle que soit leur position. Il est prévu, dans la continuité de la paroi latérale 221B de chaque demi-touche de commande 221, sur la face externe des deux côtés opposés adjacents au quatrième côté découpé, deux paires de pattes d'accroche en forme d'arc de cercle qui délimitent deux paliers 226 semi-circulaires (voir figure 8). Chaque palier 226 s'engage élastiquement sur le tourillon 266 correspondant du cadre rigide 260. Les pattes d'accroche sont légèrement décalées par rapport à la paroi latérale 221B, d'un côté vers l'intérieur de la demi-touche de commande 221, et de l'autre côté vers l'extérieur de la demi-touche de commande 221. Les deux demi-touches de commande 221 se montent sur les mêmes tourillons 266 du cadre rigide 260 de sorte que, une fois montée sur le cadre rigide 260, les demi-touches de commande 221 le recouvrent entièrement et les pattes d'accroche décalées des deux demi-touches de commande 221 accrochées sur le même tourillon 266 du cadre rigide 260 s'imbriquent l'une avec l'autre. La paroi latérale 221B de chaque demi-touche de commande 221 parfait la finition de l'interrupteur poussoir 200 et empêche à l'utilisateur d'accéder sous les demi-touches de commande 221, quelle que soit la position des demi-touches de commande 221 (voir figure 5).

Les tourillons 166 ; 266 permettent de transmettre le mouvement de bascule (rotation) de chaque touche de commande 121 ; 221 sans glissement parasite sur l'entraîneur 113 ; 213A, 213B, bien que la membrane souple 130; 230 soit interposée entre ladite touche de commande 121 ; 221 et ledit entraîneur 113 ; 213A, 213B.

Selon une variante non représentée, il est envisageable que les tourillons soient prévus sur le cadre enjoliveur, par exemple à l'intérieur de la gorge périphérique pour la fixation du cadre rigide, de sorte que la touche basculante puisse être fixée directement sur le cadre enjoliveur.

Quel que soit le mode de réalisation envisagé, les touches de commande 121 ; 221 basculantes comportent, à l'arrière, des éléments d'appui 122 ; 222 (voir figures 4 et 8) destinés à agir sur l'entraîneur 113 ; 213A, 213B correspondant qui agit lui-même sur lesdits éléments électriques et/ou électroniques 112 du moteur 110; 210, via la déformation de la membrane souple 130; 230.

Dans l'interrupteur simple 100, les éléments d'appui sont formés par des nervures 122 parallèles prévues sur la face arrière de la touche de commande 121 (voir figure 4). La membrane souple 130 est suffisamment déformable pour permettre aux nervures 122 d'appuyer sur la zone de contact correspondante de l'entraîneur 113 (voir figure 2) qui actionne alors une pièce basculante située derrière lui et portant un grain de contact pour ouvrir ou fermer le circuit électrique du moteur 110.

Dans l'interrupteur poussoir 200, les éléments d'appui sont formés sur la face arrière de chaque demi-touche de commande 221 par deux plots 222 alignés (voir figure 8). La membrane souple 230 présente deux renfoncements 231 longitudinaux de part et d'autre du bouton poussoir 223 central (voir figures 6, 7 et 8), en correspondance avec la ligne des plots 222 de chaque demi-touche de commande 221, de sorte que seule la membrane souple 230 du renfoncement 231 est déformée par les plots 222 lorsque l'utilisateur appuie sur la demi-touche de commande 221 (voir figure 6). La déformation de la membrane souple 230 au niveau du renfoncement 231 permet aux plots 222 d'appuyer sur la zone de contact correspondante de l'entraîneur 213A, 213B situé derrière elle, entraîneur 213A, 213B qui actionne à son tour une pièce basculante située derrière lui et portant un grain de contact pour fermer le circuit électrique du moteur 210 et commander la montée ou la descente du volet roulant.

Dans l'interrupteur poussoir 200, la membrane souple 230 d'étanchéité est suffisamment déformable pour accompagner le mouvement d'avant en arrière du bouton poussoir 223, sans rompre. Bien entendu, le débattement du bouton poussoir 223 est suffisamment faible pour ne pas risquer de rompre la membrane souple 230.

Ainsi, quel que soit le mode de réalisation envisagé, la membrane souple 130 ; 230 d'étanchéité n'a pas besoin d'être percée pour permettre l'actionnement de l'entraîneur 113 ; 213A, 213B, 214 situé derrière elle, ce qui garantit l'étanchéité pérenne du commutateur électrique 100 ; 200.

Comme le montrent les figures 1, 5 et 9, l'enjoliveur 120 ; 220 du commutateur électrique 100 ; 200 selon l'invention peut indifféremment être rapporté dans des aménagements d'une boîte électrique 10 destinée à être montée en saillie sur une paroi murale, ou dans des aménagements d'un cadre d'encastrement 20 comportant des moyens de montage dans une boîte d'encastrement (non représentée) encastrée dans une ouverture prévue dans une paroi murale.

Pour ce faire, il est prévu des moyens de montage et de verrouillage du cadre enjoliveur 150 sur la boîte électrique 10 ou le cadre d'encastrement 20.

Sur les figures 1 à 8, l'enjoliveur 120 de l'interrupteur simple 100 et l'enjoliveur 220 de l'interrupteur poussoir 200 précédemment décrits sont montés dans les aménagements d'une boîte électrique 10. Comme le montrent les figures 1, 3, 4, 7 et 8, cette boîte électrique 10 comprend un corps 15 qui présente ici une forme globalement parallélépipédique. En variante, elle pourrait présenter une forme différente, par exemple cylindrique. Le corps 15 est ici réalisé en deux parties principales distinctes : une partie arrière 12 appelée « platine-support 12 » et une partie avant 17 appelée « cadre 17 », mais il pourrait très bien être réalisé en une seule partie. La platine-support 12 présente une paroi de fond, qui forme la paroi de fond 11 du corps 15, et une paroi latérale qui, assemblée au cadre 17, forme la paroi latérale 16 du corps 15. La paroi latérale 16 et la paroi de fond 11 du corps 15 délimitent un logement de réception adapté à recevoir l'enjoliveur 120 ; 220 muni du moteur 110 ; 210. La paroi de fond 11 est prévue pour être fixée à la paroi murale via des orifices de forme oblongue, tandis que la paroi latérale 16 est conçue pour protéger le moteur 110 ; 210 et pour recevoir l'enjoliveur 120 ; 220. Comme le montrent les figures 3 et 8, la paroi latérale 16 du corps 15 de la boîte électrique 10 est découpée pour recevoir au moins un embout passe-câble 50 pour le passage d'un câble électrique ou d'une gaine électrique de type ICTA ou d'un tube de type IRL, destiné à alimenter les bornes de connexion du moteur 110 ; 210. Ici, la boîte électrique 10 comprend deux embouts passe-câble 50.

Pour la fixation du cadre enjoliveur 150 sur la boîte électrique 10, il est prévu dans une partie avant de la paroi latérale 16 du corps 15 de la boîte électrique 10, d'une part, un trottoir 18 de butée du cadre enjoliveur 150 faisant saillie à l'intérieur du logement de réception (voir figure 3), et, d'autre part, des orifices 19 de fixation dudit cadre enjoliveur 150 destinés à recevoir des éléments permettant le verrouillage du cadre enjoliveur 150 sur la boîte électrique 10. Le trottoir 18 de butée qui court le long de la paroi latérale 16 délimitant le logement de réception délimite lui-même une ouverture adaptée au passage du socle 111 ; 211 du moteur 110; 210. Ainsi, l'ouverture délimitée par le trottoir 18 est ici de forme carrée, mais elle pourrait être de toute autre forme tant qu'elle est adaptée à la forme du socle du moteur. Les éléments (non visibles) de verrouillage du cadre enjoliveur 150 sur la boîte électrique 10 sont par exemple des éléments quart-de-tour, manoeuvrables avant la fixation du cadre rigide 160 ; 260 dans ladite gorge périphérique 152, depuis des orifices 159 prévus dans le fond de la gorge périphérique 152 du cadre enjoliveur 150 (voir figures 3 et 7).

La boîte électrique présentée sur les figures 1 à 4 présente une section de forme carrée et elle définit un unique poste permettant d'accueillir un mécanisme de commutation : on dit qu'il s'agit d'une boîte monoposte.

En variante, il pourrait s'agir d'une boîte multiposte, présentant une section de forme rectangulaire et définissant deux ou trois postes. Dans cette variante, la partie avant de la boîte électrique (aussi appelée cadre de la boîte électrique) définit de préférence plusieurs ouvertures, chacune étant destinée à recevoir un poste.

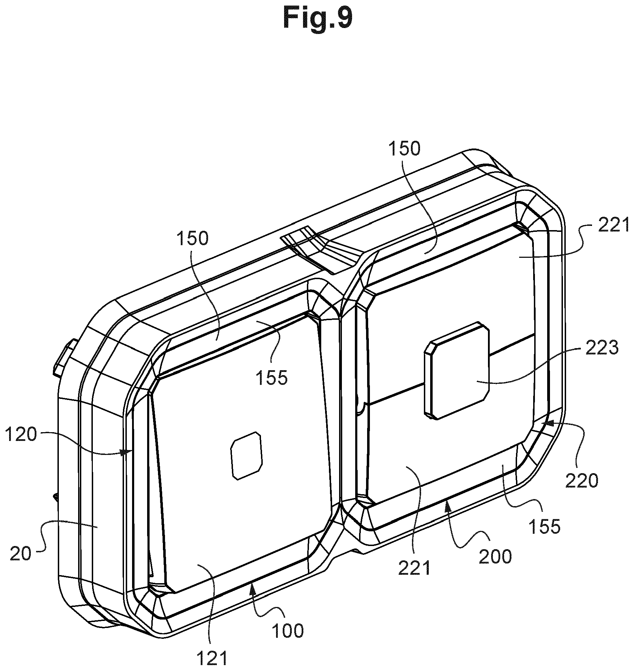

Comme le montrent les figures 9 à 11, l'enjoliveur 120 de l'interrupteur simple 100 et l'enjoliveur 220 de l'interrupteur poussoir 200 précédemment décrits sont aussi adaptés à être montés, via leur cadre enjoliveur 150, dans les aménagements d'un cadre d'encastrement 20. Ici, les enjoliveurs 120 ; 220 sont reçus dans un cadre d'encastrement multiposte, plus particulièrement un cadre d'encastrement 20 double poste à fixation horizontale.

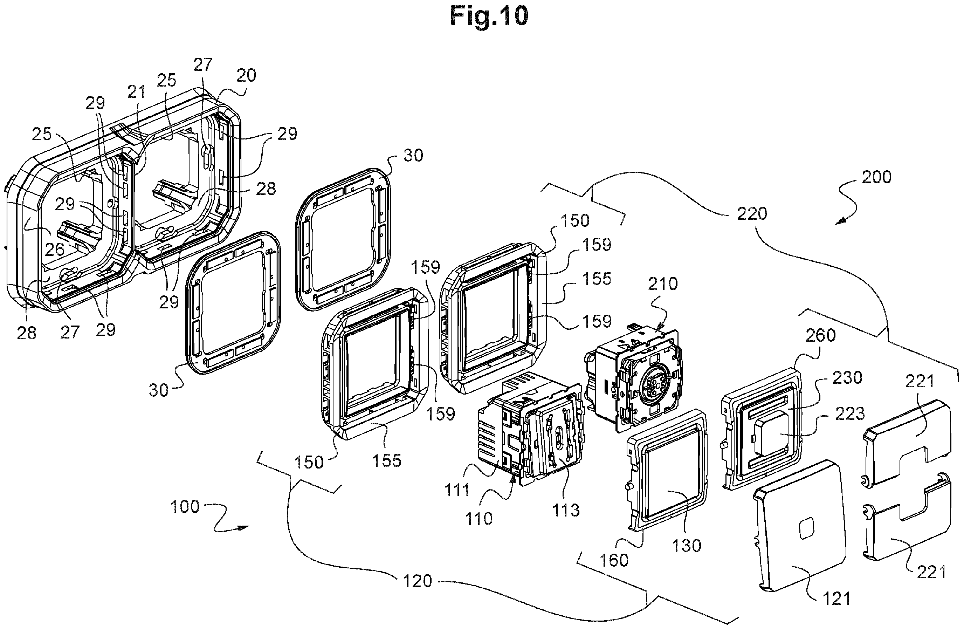

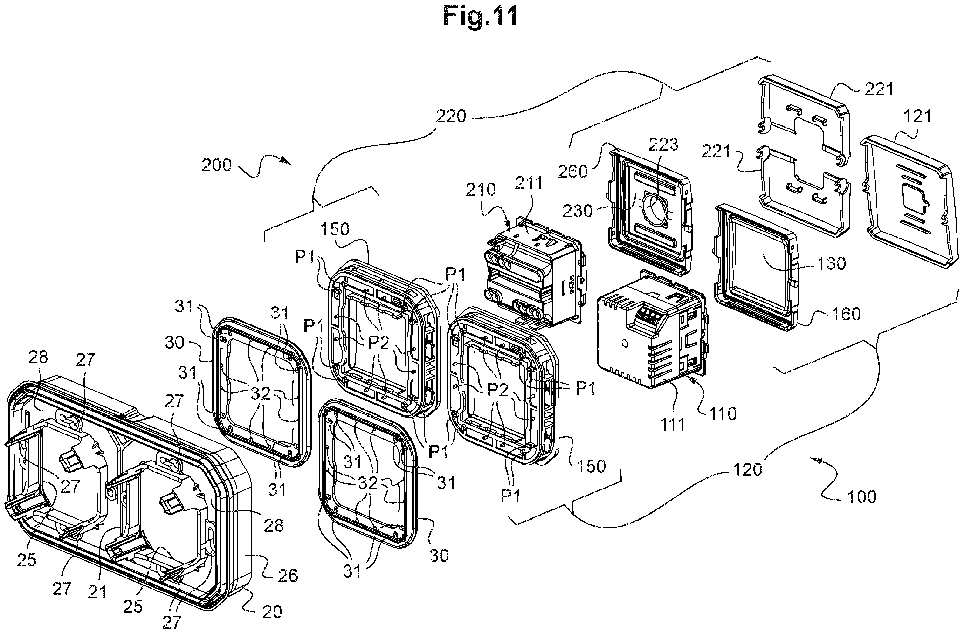

Comme le montre la figure 10, le cadre d'encastrement 20 double poste comprend essentiellement une paroi latérale 26 qui délimite intérieurement une ouverture principale, divisée en deux par une paroi interne 21 de manière à délimiter deux ouvertures d'accueil 25 de deux enjoliveurs 120; 220, chacun muni d'un moteur 110; 210. Chaque ouverture d'accueil 25 présente une forme globalement carrée aux angles coupés. En variante, elle pourrait présenter une forme différente, par exemple cylindrique, tant que la forme est adaptée à la forme extérieure globale du cadre enjoliveur 150. Il est prévu à l'arrière du cadre d'encastrement 20 des moyens de montage à la boîte d'encastrement (non représentée), notamment des ouvertures 27 (voir figures 10 et 11) pour le passage d'une vis de fixation destinées à être fixées dans la boîte d'encastrement.

De manière analogue à la boîte électrique 10 précédemment décrite, le cadre d'encastrement 20 comprend, pour la fixation de chaque cadre enjoliveur 150, un trottoir 28 de butée faisant saillie à l'intérieur de chaque ouverture d'accueil 25 (voir figure 10), ainsi que des orifices 29 latéraux destinés à recevoir des éléments permettant le verrouillage de chaque cadre enjoliveur 150 sur le cadre d'encastrement 20 (voir figure 10). Le trottoir 28 de butée qui court à l'intérieur de chaque ouverture d'accueil 25 délimite lui-même une ouverture adaptée au passage du socle 111 ; 211 du moteur 110 ; 210. Ainsi, l'ouverture délimitée par le trottoir 28 est ici de forme carrée, mais elle pourrait être de toute autre forme tant qu'elle est adaptée à la forme du socle du moteur. Les orifices 29 latéraux sont destinés à recevoir des éléments permettant le verrouillage de chaque cadre enjoliveur 150 sur le cadre d'encastrement 20. Ces éléments (non visibles) de verrouillage sont par exemple des éléments quart-de-tour, manoeuvrables avant la fixation du cadre rigide 160 ; 260 dans ladite gorge périphérique 152, depuis des orifices 159 prévus dans le fond de la gorge périphérique 152 du cadre enjoliveur 150 (voir figure 10)

Quel que soit le mode de réalisation envisagé, pour garantir l'étanchéité du commutateur électrique 100 ; 200, il est prévu un joint d'étanchéité 30 constituant une pièce indépendante interposée entre l'enjoliveur 120 ; 220 et la boîte électrique 10 ou le cadre d'encastrement 20, plus précisément entre le cadre enjoliveur 150 et la boîte électrique 10 ou le cadre d'encastrement 20 (voir figures 2 à 4, 6 à 8, 10 et 11).

Pour le bon positionnement du joint d'étanchéité 30 entre le cadre enjoliveur 150 et la boîte électrique 10 ou le cadre d'encastrement 20, il est prévu sur le joint d'étanchéité 30 des ouvertures 31, 32 destinées à recevoir des picots P1, P2 prévus en correspondance à l'arrière du cadre enjoliveur 150 (voir figures 4, 8 et 11).

Comme le montrent les figures 2 et 6, le joint d'étanchéité 30 est écrasé entre le cadre enjoliveur 150 et la boîte électrique 10 ou le cadre d'encastrement 20 lors du verrouillage dudit cadre enjoliveur 150 sur ladite boîte électrique 10 ou le cadre d'encastrement 20. Le joint d'étanchéité 30 est une pièce indépendante, ce qui facilite la fabrication du cadre enjoliveur 150 qui est alors formé par une pièce monobloc en matière thermoplastique rigide. En variante, on pourrait prévoir de former le cadre enjoliveur avec le joint d'étanchéité en une seule pièce bi matière.

Bien entendu, en variante, l'un quelconque des commutateurs électriques 100; 200 selon l'invention pourrait être fixé dans un cadre d'encastrement simple poste. En variante encore, les commutateurs électriques 100; 200 selon l'invention pourraient être fixés dans un cadre d'encastrement multiposte à fixation verticale, ou encore dans une boîte électrique multiposte, elle-même à fixation horizontale ou verticale, sans que l'invention soit modifiée.

## Revendications

1. Commutateur électrique (100 ; 200) étanche comprenant :
- un mécanisme de commutation (110; 210) pourvu d'un socle (111; 211) renfermant des éléments électriques et/ou électroniques (112),
- une membrane souple (130 ; 230) d'étanchéité tendue sur un cadre rigide (160 ; 260) et placée à l'avant du mécanisme de commutation (110 ; 210) de manière à isoler de l'extérieur les éléments électriques et/ou électroniques (112) du mécanisme de commutation (110 ; 210), et
- un enjoliveur (120 ; 220) pourvu d'un cadre enjoliveur (150) sur lequel est rapporté, par l'avant, ledit cadre rigide (160 ; 260),
**caractérisé en ce que** le socle (111 ; 211) du mécanisme de commutation (110 ; 210) est monté par l'avant sur le cadre enjoliveur (150).

2. Commutateur électrique (100 ; 200) selon la revendication 1, dans lequel le cadre rigide (160 ; 260) et le cadre enjoliveur (150) sont pourvus de moyens de montage mécaniques réciproques.

3. Commutateur électrique (100 ; 200) selon la revendication 2, dans lequel les moyens de montage mécaniques réciproques du cadre rigide (160 ; 260) sur le cadre enjoliveur (150) sont des moyens d'emboîtement (152, 161 ; 261) et/ou des moyens d'encliquetage (156, 162 ; 262).

4. Commutateur électrique (100 ; 200) selon l'une des revendications 1 à 3, dans lequel la membrane souple (130; 230) d'étanchéité et le cadre rigide (160 ; 260) forment une pièce monobloc bi-matière.

5. Commutateur électrique (100 ; 200) selon l'une des revendications 1 à 4, dans lequel la membrane souple (130; 230) d'étanchéité est réalisée en une matière élastomère thermoplastique.

6. Commutateur électrique (100 ; 200) selon l'une des revendications 1 à 5, dans lequel le cadre rigide (160 ; 260) est réalisé en une matière thermoplastique rigide.

7. Commutateur électrique (100) selon l'une des revendications 1 à 6, dans lequel la membrane souple (130) d'étanchéité recouvre toute la face avant du mécanisme de commutation (110).

8. Commutateur électrique (100 ; 200) selon l'une des revendications 1 à 7, dans lequel le cadre rigide (160 ; 260) comporte, sur deux côtés opposés, deux tourillons (166 ; 266) en saillie sur lesquels est montée à pivotement une touche (121 ; 221) basculante pour la commande du mécanisme de commutation (110 ; 210).

9. Commutateur électrique (100 ; 200) selon la revendication 8, dans lequel la touche (121; 212) basculante comporte, à l'arrière, des éléments d'appui (122 ; 222) destinés à agir sur lesdits éléments électriques et/ou électroniques (112) du mécanisme de commutation (110 ; 210) via la déformation de la membrane souple (130 ; 230) d'étanchéité.

10. Commutateur électrique (200) selon l'une des revendications 8 et 9, dans lequel la touche basculante comporte deux demi-touches (221) basculantes.

11. Commutateur électrique (100 ; 200) selon l'une des revendications 1 à 10, dans lequel le cadre enjoliveur (150) est muni d'un trottoir (151) interne destiné à être pris en sandwich par des moyens d'accroche (115, 117 ; 215, 217) du socle (111; 211) du mécanisme de commutation (110 ; 210).

12. Commutateur électrique (100 ; 200) selon l'une des revendications 1 à 11 dans lequel le cadre enjoliveur (150) est rapporté dans des aménagements d'une boîte électrique (10) destinée à être montée en saillie sur une paroi murale, ou dans des aménagements d'un cadre d'encastrement (20) comportant des moyens de montage dans une boîte d'encastrement.

13. Commutateur électrique (100 ; 200) selon la revendication 12 dans lequel il est prévu un joint d'étanchéité (30) constituant une pièce indépendante interposée entre le cadre enjoliveur (150) et la boîte électrique (10) ou le cadre d'encastrement (20).

## Patentansprüche

1. Dichter elektrischer Schalter (100; 200) mit:
- einem Umschaltmechanismus (110; 210), der mit einem elektrische und/oder elektronische Elemente (112) umschließenden Sockel (111; 211) versehen ist,
- einer flexiblen Abdichtungsmembrane (130; 230), die auf einen steifen Rahmen (160; 260) gespannt ist und auf der Vorderseite des Umschaltmechanismus (110; 210) so angeordnet ist, daß die elektrischen und/oder elektronischen Elemente (112) des Umschaltmechanismus (110; 210) nach außen hin isoliert sind,
- einer mit einem Blendenrahmen (150) versehenen Blende (110; 210), auf die der steife Rahmen (160; 260) von vorne aufgebracht ist,
**dadurch gekennzeichnet, daß** der Sockel (111; 211) des Umschaltmechanismus (110; 210) von vorne auf den Blendenrahmen (150) montiert ist.

2. Elektrischer Schalter (100; 200) gemäß Anspruch 1, bei dem der steife Rahmen (160; 260) und der Blendenrahmen (150) mit gegenseitigen mechanischen Montagemitteln versehen sind.

3. Elektrischer Schalter (100; 200) gemäß Anspruch 2, bei dem die gegenseitigen mechanischen Mittel für die Montage des steifen Rahmens (160; 260) auf dem Blendenrahmen (150) Einschubmittel (152, 161; 261) und/oder Einrastmittel (156, 162; 262) sind.

4. Elektrischer Schalter (100; 200) gemäß einem der Ansprüche 1 bis 3, bei dem die flexible Abdichtungsmembrane (130; 230) und der steife Rahmen (160; 260) ein einstückiges Teil aus zwei Materialien bilden.

5. Elektrischer Schalter (100; 200) gemäß einem der Ansprüche 1 bis 4, bei dem die flexible Abdichtungsmembrane (130; 230) aus einem thermoplastischen Elastomermaterial gefertigt ist.

6. Elektrischer Schalter (100; 200) gemäß einem der Ansprüche 1 bis 5, bei dem der steife Rahmen (160; 260) aus einem steifen thermoplastischen Material gefertigt ist.

7. Elektrischer Schalter (100; 200) gemäß einem der Ansprüche 1 bis 6, bei dem die flexible Abdichtungsmembrane (130) die gesamte Vorderseite des Umschaltmechanismus (110) bedeckt.

8. Elektrischer Schalter (100; 200) gemäß einem der Ansprüche 1 bis Anspruch 1, bei dem der steife Rahmen (160; 260) auf zwei entgegengesetzten Seiten zwei hervorstehende Zapfen (166; 266) aufweist, auf denen eine Kipptaste (121; 221) zum Steuern des Umschaltmechanismus (110; 210) schwenkend angebracht ist.

9. Elektrischer Schalter (100; 200) gemäß Anspruch 8, bei dem die Kipptaste (121; 221) hinten Druckelemente (122; 222) aufweist, die dazu bestimmt sind, über die Verformung der flexiblen Abdichtungsmembrane (130; 230) auf die elektrischen und/oder elektronischen Elemente (112) des Umschaltmechanismus (110; 210) zu wirken.

10. Elektrischer Schalter (100; 200) gemäß einem der Ansprüche 8 und 9, bei dem die Kipptaste zwei Halbkipptasten (221) aufweist.

11. Elektrischer Schalter (100; 200) gemäß einem der Ansprüche 1 bis 10, bei dem der Blendenrahmen (150) einen inneren Rand (151) aufweist, der dazu bestimmt ist, von Einhakmitteln (115, 117; 215, 217) des Sockels (111; 211) des Umschaltmechanismus (110; 210) in die Mitte genommen zu werden.

12. Elektrischer Schalter (100; 200) gemäß einem der Ansprüche 1 bis 11, bei dem der Blendenrahmen (150) in Ausformungen eines Schaltkastens (10) eingebracht ist, der dazu bestimmt ist, auf einer Wand aufsitzend oder in Ausformungen eines Einbaurahmens (20) angebracht zu werden, der Mittel zum Montieren in einem Einbaukasten aufweist.

13. Elektrischer Schalter (100; 200) gemäß Anspruch 12, bei dem ein Dichtring (30) vorgesehen ist, der ein unabhängiges Teil bildet, das zwischen dem Blendenrahmen (150) und dem Schaltkasten (10) oder dem Einbaurahmen (20) eingefügt ist.

## Claims

1. Sealed electrical switch (100; 200) comprising:
- a switching mechanism (110; 210) provided with a base (111; 211) containing electrical and/or electronic elements (112),
- a flexible sealing membrane (130; 230) stretched over a rigid frame (160; 260) and placed at the front of the switching mechanism (110; 210) so as to insulate the electrical and/or electronic elements (112) of the switching mechanism (110; 210) from the outside, and
- a trim plate (120; 220) provided with a trim plate frame (150) on which said rigid frame (160; 260) is mounted, from the front,
**characterised in that** the base (111; 211) of the switching mechanism (110; 210) is mounted by the front on the trim plate frame (150).

2. Electrical switch (100; 200) according to claim 1, wherein the rigid frame (160; 260) and the trim plate frame (150) are provided with reciprocal mechanical mounting means.

3. Electrical switch (100; 200) according to claim 2, wherein the reciprocal mechanical mounting means of the rigid frame (160; 260) on the trim plate frame (150) are interlocking means (152, 161; 261) and/or snap-fitting means (156, 162; 262).

4. Electrical switch (100; 200) according to one of claims 1 to 3, wherein the flexible sealing membrane (130; 230) and the rigid frame (160; 260) form a bi-material one-piece part.

5. Electrical switch (100; 200) according to one of claims 1 to 4, wherein the flexible sealing membrane (130; 230) is made of a thermoplastic elastomer material.

6. Electrical switch (100; 200) according to one of claims 1 to 5, wherein the rigid frame (160; 260) is made of a rigid thermoplastic material.

7. Electrical switch (100) according to one of claims 1 to 6, wherein the flexible sealing membrane (130) covers the whole front face of the switching mechanism (110).

8. Electrical switch (100; 200) according to one of claims 1 to 7, wherein the rigid frame (160; 260) comprises, on two opposite sides, two projecting pins (166; 266), on which each tilt control button (121; 221) for controlling the switching mechanism (110; 210) is pivotingly mounted.

9. Electrical switch (100; 200) according to claim 8, wherein the tilt button (121; 212) comprises, rearwards, bearing elements (122; 222) intended to act on said electrical and/or electronic elements (112) of the switching mechanism (110; 210) via the deformation of the flexible sealing membrane (130; 230) .

10. Electrical switch (200) according to one of claims 8 and 9, wherein the tilt button comprises two tilt half-buttons (221) .

11. Electrical switch (100; 200) according to one of claims 1 to 10, wherein the trim plate frame (150) is provided with an internal curb (151) intended to be sandwiched by hooking means (115, 117; 215, 217) of the base (111; 211) of the switching mechanism (110; 210).

12. Electrical switch (100; 200) according to one of claims 1 to 11, wherein the trim plate frame (150) is mounted in arrangements of an electrical box (10) intended to be mounted projecting over a wall surface, or in arrangements of a flush-mounted frame (20) comprising mounting means in a flush-mounted box.

13. Electrical switch (100; 200) according to claim 12, wherein a seal (30) is provided, constituting an independent part interposed between the trim plate frame (150) and the electrical box (10) or the flush-mounted frame (20).
